# EUROPEAN PATENT APPLICATION

(11) **EP 1 452 220 A1**
(43) Date of publication of application: **01.09.2004**
(21) Application number: 03027222.3
(22) Date of filing: 28.11.2003
(51) Int. Cl.: B01D 53/46, B01D 53/72, B01D 53/86, B01D 53/58

(54) **Process for removing harmful organometallic compounds from a gas**

(30) Priority: 26.12.2002 JP 2002376411
(71) Applicant: JAPAN PIONICS CO., LTD., Minato-ku, Tokyo (JP)
(72) Inventor: Otsuka, Kenji, 5181, Tamura Hiratsuka-shi Kanagawa (JP); Kasaya, Takashi, 5181, Tamura Hiratsuka-shi Kanagawa (JP); Akiyama, Toshio, 5181, Tamura Hiratsuka-shi Kanagawa (JP)
(74) Representative: Leifert & Steffan

(57) **Abstract**

A cleaning process of harmful gas containing at least one kind selected from trimethylgallium, triethylgallium, trimethylindium, triethylindium, trimethylaluminum and triethylaluminum as a harmful component by bringing into contact with a cleaning agent comprising a metallic oxide essentially containing copper (II) oxide and manganese (IV) oxide; and an alkali metal compound, thereby removing the harmful component from the harmful gas. According to the invention, a cleaning process of harmful gas containing harmful component such as trimethylgallium exhausted from manufacturing process of gallium nitride-based compound semiconductor, which efficiently cleans with superior cleaning capacity without reducing the removing efficiency of harmful component and without generating new harmful component of nitrogen oxides, etc., even in the case where the harmful gas to be treated is dry, or even in the case where the harmful gas contains ammonia is realized.

## Description

### BACKGROUND OF THE INVENTION

### 1. Technical Field of the Invention

The present invention relates to a process for cleaning harmful gas. More particularly, the present invention pertains to a process for cleaning gas containing harmful composition of trimethylgallium and the like exhausted from a production process of gallium nitride-based compound semiconductor, etc.

### 2. Description of the Prior Art

In late years, a rising demand for a gallium nitride-based compound semiconductor regarding the elements such as light emitting diode or laser diode is rapidly increasing mainly in optical communication field. As a production process of gallium nitride-based compound semiconductor, a chemical vapor deposition method that forms semi-conductor film of gallium nitride-based compound on the surface of a substrate of sapphire, etc., set preparedly in a reaction tube by a vapor phase epitaxy, using organic metal gas of, for example, trimethylgallium, trimethylindium or trimethylaluminum, etc. as group IIIb metal source, and using ammonia as nitrogen source is generally known.

When the organometallic compound containing these group IIIb element in the Periodic Table is employed in the semiconductor production process, an unreacted organometallic compound in the state of diluted with gas such as nitrogen, hydrogen, helium and the like is exhausted along with ammonia, Because these extremely toxic organometallic compounds give bad influence to human organism and environment in the case where they are exhausted in atmospheric air without any treatment, it is necessary to remove them before being exhausted. Various cleaning process of harmful gas efficiently removing these organometallic compounds from harmful gas containing organometallic compound such as trimethylgallium exhausted from production process of gallium nitride-based compound semiconductor have been developed.

Namely, the following cleaning processes for harmful gas were generally employed:
(1) a cleaning process absorbing ammonia and removing trimethylgallium, etc., by bringing the harmful gas into contact with treatment solution of sulfuric acid and the like;
(2) a cleaning process removing trimethylgallium, etc., by bringing the harmful gas into contact with a cleaning agent comprising soda lime or with a cleaning agent essentially consisting of soda lime carrying copper (II) chemical compound; or
(3) a combustional cleaning process comprising burning harmful components by introducing the same into the flame of an incinerator employing fuel such as hydrogen, methane or propane.

However, as for the foregoing cleaning process (1), it suffers from the disadvantages in that the removal efficiency of harmful component such as trimethylgallium, etc., is too low to succeed in decreasing its concentration under environmental quality standard permissive concentration, and in that there are solid matters such as gallium oxide and the like remaining in the treatment solution, which requires hazardous operation in the aftertreatment of themselves. Further, as for the foregoing cleaning process (2), it suffers from the disadvantages in that moisture content in the cleaning agent is lost by degrees in the case where the harmful gas to be treated is dry, thereby extremely decreases removal efficiency when the moisture content become around 2 % or less. Furthermore, as for the foregoing cleaning process (3), it suffers from the disadvantages in that a combustional state is obliged to be maintained even at standby time when a harmful gas is not treated, whereby energy cost is tremendously expensive and besides, a large amount of nitrogen oxides caused by the presence of ammonia are exhausted into the atmosphere.

Accordingly, an object of the present invention is to provide a cleaning process of harmful gas containing harmful component such as trimethylgallium exhausted from production process of gallium nitride-based compound semiconductor, which efficiently cleans with superior cleaning capacity without reducing the removing efficiency of harmful component and without generating new harmful component of nitrogen oxides, etc., even in the case where the harmful gas to be treated is dry, or even in the case where the harmful gas contains ammonia.

### SUMMARY OF THE INVENTION

As a result of extensive researches for overcoming the foregoing problems by the inventors, it was found that the use of a cleaning agent prepared by adherently adding alkali metal compounds to a metallic oxide essentially comprising copper (II) oxide and manganese (IV) oxide efficiently removes the harmful component containing such as trimethylgallium with superior cleaning capacity without reducing the removing efficiency of harmful component and without generating new harmful component of nitrogen oxides, etc., even in the case where the harmful gas to be treated is dry, or even in the case where the harmful gas contains ammonia. Therefore, a cleaning process of harmful gas is completed and the object of the present invention was achieved.

Namely, the present invention provides a cleaning process of harmful gas containing at least one kind selected from trimethylgallium, triethylgallium, trimethylindium, triethylindium, trimethylaluminum and triethylaluminum as a harmful component by bringing into contact with a cleaning agent comprising a metallic oxide essentially containing copper (II) oxide and manganese (IV) oxide; and an alkali metal compound, thereby removing the harmful component from the harmful gas.

### DESCRIPTION OF THE PREFERRED EMBODIMENTS

The present invention is applied to remove gas containing harmful component of trimethylgallium and the like exhausted from a production process of gallium nitride-based compound semiconductor, etc. The present invention particularly reveals advantageous effects especially in the case where the harmful gas is dry in the viewpoint of cleaning without reducing removal efficiency of the harmful component and with excellent cleaning capacity (a removing amount of the harmful component per unit amount of the cleaning agent). The present invention provides a cleaning process of harmful gas containing at least one kind selected from trimethylgallium, triethylgallium, trimethylindium, triethylindium, trimethylaluminum and triethylaluminum as a harmful component by bringing into contact with a cleaning agent comprising a metallic oxide essentially containing copper (II) oxide and manganese (IV) oxide; and an alkali metal compound, thereby removing the harmful component from the harmful gas.

The present invention employs a cleaning agent prepared by adherently adding an alkali metal compound to a metallic oxide. The metallic oxide essentially contains copper (II) oxide, manganese (IV) oxide and may additionally combine cobalt (III) oxide, silver (I) oxide, silver (II) oxide, aluminum (III) oxide, silicon (IV) oxide, etc. The total content of the copper (II) oxide and the manganese (IV) oxide contained in the metallic oxide is usually at least 60 % by weight and is preferably at least 70 % by weight. Further, the ratio between the copper (II) oxide and the manganese (IV) oxide is usually 1: 0.8 to 5.0, preferably around 1: 1.2 to 3.0. The metallic oxide may be prepared in accordance with various kinds of well-known process, however, marketed products available as Hopcalite may be conveniently employed.

Hopcalite is marketed mainly as two elements series consisting of the copper (II) oxide in an amount of 40 % by weight and the manganese (IV) oxide in an amount of 60 % by weight or is marketed as mixed oxide of copper oxide-manganese oxide series with magnesium oxide, aluminum oxide, silicon oxide, etc., in an amount of up to 30 % by weight. They may be barely employed or may be employed in combination of the foregoing metallic oxides.

These metallic oxides are usually used after being molded and may be employed as various kinds of form such as crushed articles, extrusion molded articles, compression molded articles, etc. Regarding the size of the metallic oxides, around 4 to 20 mesh in the case of the crushed articles, a diameter of 1.5 to 4 mm and a length of about 3 to 20 mm in the case of the extrusion molded articles, and usually cylindrical shape with a diameter of 3 to 6 mm and a height of about 3 to 6 mm in the case of the compression molded articles may be preferable.

In the cleaning process of harmful gas according to the present invention, the alkali metal compound adherently added to the metallic oxide may be hydroxide, oxide or carbonate, etc., of potassium, sodium or lithium. The specific examples of the alkali metal compound include potassium hydroxide, sodium hydroxide, lithium hydroxide, potassium oxide, sodium oxide, potassium carbonate, sodium carbonate, these mixtures, etc. Among these, potassium hydroxide, sodium hydroxide, potassium oxide, potassium carbonate and the like are favorable.

With regards to the amount of the alkali metal compound adherently added to the metallic oxide is not generally specified because it is different depending on the kind, concentration, etc., of the harmful component, however, it is usually 1 to 50 parts by weight and preferably about 3 to 15 parts by weight as converted to hydroxide of each alkali metal over an amount of 100 part by weight of the sum adding the copper (II) oxide and the manganese (IV) oxide. When the amount is less than 1 part by weight, the removing efficiency of the harmful component decreases, on the other hand, when the amount exceeds 50 parts by weight, the surface area of the metallic oxide decreases causing anxiety of degrading the cleaning capacity for removing the harmful component.

The concentration of the harmful component contained in the harmful gas to be cleaned by the present invention is usually 1 % or less and preferably 0.1 % or less. Further, the temperature of contacting the cleaning agent with the harmful gas is around 0 to 100 °C, usually operated at room temperature (10 to 50 °C) without requiring heating or cooling in particular. Although the temperature elevation of around 10 to 40 °C may be caused by heat generation due to a reaction heat after the initiation of the contact in the case where the concentration of the harmful component is large or where the harmful gas contains active reducing gas such as hydrogen or the like, any abnormal heat generation would not occur. The pressure of contacting the cleaning agent with the harmful gas is usually an atmospheric pressure, however, it is possible to operate under a reduced pressure of 1 KPa (absolute pressure) or under an elevated pressure of 2 MPa (absolute pressure).

The gas to be treated by the present invention may include nitrogen, hydrogen, helium, argon and the like as a base gas and may be in dry state or in highly wet state to such an extent as to cause no moisture condensation. Further, although a superior cleaning capacity may be obtained without decreasing the removal efficiency of the harmful component when the cleaning agent is either in dry state or in highly wet state, dry state is preferable in the viewpoint of reducing a load due to moisture adsorption when an adsorbent such as zeolite and the like is employed in the case where, for example, ammonia is treated afterwards. Therefore, it is suitable that the moisture content in the cleaning agent is decreased to less than 1 % by weight preparedly drying the cleaning agent before bringing the harmful gas into contact with the cleaning agent.

Regarding the drying of the cleaning agent, although it may be carried out under the atmospheric air, it is preferably carried out under the atmosphere of the inert gas such as nitrogen or the like in consideration of the preventive capability against the degradation by heat of the cleaning agent. Additionally, the cleaning agent may be dried in desiccators; however, it may be dried in the state of being filled in the cleaning column by passing dried gas through the cleaning agent.

Moreover, the present invention provides a cleaning process of harmful gas with superior cleaning capacity without reducing the removing efficiency of harmful component, without reducing the cleaning capacity of the cleaning agent and without generating new harmful component of nitrogen oxides, etc., even in the case where the harmful gas to be treated contains ammonia.

Although the concentration of the harmful component contained in the harmful gas treated by the cleaning process of the present invention or the flow rate of the harmful gas is not particularly restricted, it is generally desirable that the larger the concentration, the smaller the flow rate. The concentration of the harmful component removable by the cleaning process is usually 1 % or less, however, the harmful component with the concentration larger than 1 % may be removed in the case where the flow rate is small. The cleaning column is designed depending on the concentration of the harmful component, the flow rate of the harmful gas to be treated and so on. It is preferable that the superficial linear velocity (LV) is designed to be 0.5 to 50 cm/second in the case where the concentration of the harmful component is relatively small as 0.1 % or less, to be 0.05 to 20 cm/second in the case where the concentration is around 0.1 to 1 %, and to be 10 cm/second or slower in the case where the concentration is relatively large as 1 % or larger.

The cleaning agent is usually filled in the cleaning column of the harmful gas and is used as a fixed bed; however, it may be used as a moving bed or a fluidized bed. The cleaning agent is usually filled in the cleaning column and the harmful gas containing trimethylgallium, triethylgallium, trimethylindium, triethylindium, trimethylaluminum or triethylaluminum is passed through the cleaning column and the foregoing harmful component is removed by bringing into contact with the cleaning agent. Additionally, a filling density of the cleaning agent filled in the cleaning column is about 1.0 to 1.5 g/milliliter in the present invention.

### EXAMPLES

In the following examples are described several preferred embodiments to concretely illustrate the invention, however, it is to be understood that the invention is not intended to be limited to the specific embodiments.

### Example 1

### (Preparation of the cleaning agent)

Extrusion molded articles commercially available as Hopcalite consisting of manganese dioxide (MnO₂) in an amount of 71 % by weight, copper oxide (CuO) in an amount of 23 % by weight and aluminum oxide (Al₂O₃) in an amount of 3 % by weight; having a diameter of 1.5 mm and a length of 3 to 10 mm were employed as the metallic oxide.

Potassium hydroxide solution with concentration of 50 % by weight was sprayed and impregnated over 1000 g of Hopcalite, and then Hopcalite was dried for 24 hours under the atmosphere of nitrogen at the temperature of 50 °C. Consequently, a cleaning agent consisting of Hopcalite having potassium hydroxide adhered in an amount of 20 part by weight over 100 part by weight of Hopcalite was prepared. The moisture content in the cleaning agent was 0.7 % by weight.

### (Measurement of cleaning capacity)

The cleaning agent thus prepared was filled into a cylindrical cleaning column having an internal diameter of 20 mm in an amount of 20 milliliter. Subsequently, dry nitrogen gas to be treated containing trimethylgallium in an amount of 1000 ppm was continuously passed through the cleaning column under the condition of 942 milliliter/minute as flow rate (a superficial linear velocity of 5 cm/second) and at 20 to 25 °C as contact temperature between the cleaning agent and the harmful gas. Meanwhile, the gas at the outlet of the cleaning column was sampled, and a measurement was made of a period of time required until detecting the trimethylgallium (effective treatment time) by the use of an infrared absorption spectrum measuring instrument (FT-IR; lower detectable limit: 0.3 ppm). From the measured value, the volume of removed harmful component (liter) per one liter of the cleaning agent (cleaning capacity) was determined with the unit expressed as "L/L agent". The result is shown in Table 1.

### Examples 2 to 4

In Examples 2 to 4, cleaning agents were prepared in similar manners as Example 1 except that the adhered amount of the potassium hydroxide was changed into 5 part by weight, 10 part by weight and 40 part by weight over 100 part by weight of Hopcalite respectively. The moisture content in the cleaning agent was respectively in the range from 0.5 to 0.9 % by weight.

The measurements of the cleaning capacity were carried out in the same manners as Example 1 except that the foregoing cleaning agents were employed in Examples 2 to 4. The results are shown in Table 1.

### Example 5

A cleaning agent was prepared in a similar manner as Example 1 except that the alkali metal compound was replaced by sodium hydroxide. The moisture content in the cleaning agent was 0.8 % by weight.

The measurement of the cleaning capacity was carried out in the same manner as Example 1 except that the foregoing cleaning agent was employed in Example 5. The result is shown in Table 1.

### Example 6

A cleaning agent was prepared in a similar manner as Example 1 except that Hopcalite was dried under the atmospheric air instead of nitrogen after spraying and impregnating potassium hydroxide solution. The moisture content in the cleaning agent was 0.7 % by weight.

The measurement of the cleaning capacity was carried out in the same manner as Example 1 except that the foregoing cleaning agent was employed in Example 6. The result is shown in Table 1.

### Example 7 and Example 8

The measurements of the cleaning capacity were carried out in the same manners as Example 1 except that the concentration of trimethylgallium contained in the nitrogen gas to be treated were changed into 100 ppm and 10000 ppm respectively in Example 7 and Example 8. The results are shown in Table 1.

### Examples 9 to 11

The measurements of the cleaning capacity were carried out in the same manners as Example 1 except that the trimethylgallium as the harmful component was replaced to trimethylindium, trimethylaluminum and triethylgallium respectively in Examples 9 to 11. The results are shown in Table 1.

### Example 12

The measurement of the cleaning capacity was carried out in the same manner as Example 1 except that the harmful gas to be treated was replaced to dry nitrogen gas containing ammonia in an amount of 10 % by volume in addition to the trimethylgallium in an amount of 1000 ppm in Example 12. The result is shown in Table 1. No nitrogen oxide was detected among the cleaned gas at the outlet of the cleaning column.

### Example 13

The measurement of the cleaning capacity was carried out in the same manner as Example 1 except that the harmful gas to be treated was replaced to dry nitrogen gas containing trimethylindium in an amount of 1000 ppm and ammonia in an amount of 10 % by volume in Example 13. The result is shown in Table 1. No nitrogen oxide was detected among the cleaned gas at the outlet of the cleaning column.

### Example 14

The measurement of the cleaning capacity was carried out in the same manner as Example 1 except that the harmful gas to be treated was replaced to dry nitrogen gas containing trimethylaluminum in an amount of 1000 ppm and ammonia in an amount of 10 % by volume in Example 14. The result is shown in Table 1. No nitrogen oxide was detected among the cleaned gas at the outlet of the cleaning column.

### Example 15

The measurement of the cleaning capacity was carried out in the same manner as Example 1 except that the harmful gas to be treated was replaced to dry nitrogen gas containing triethylgallium in an amount of 1000 ppm and ammonia in an amount of 10 % by volume in Example 15. The result is shown in Table 1. No nitrogen oxide was detected among the cleaned gas at the outlet of the cleaning column.

### Comparative Example 1

A cleaning agent was prepared in a similar manner as Example 1 except that the Hopcalite having potassium hydroxide was replaced by soda lime. The measurement of the cleaning capacity was carried out in the same manner as Example 1 except that the foregoing cleaning agent was employed in Comparative Example 1. The result is shown in Table 1.

**Table 1**

| | Cleaning Agent (Primary Comp: CuO,MnO2) | | Harmful Component (Concentration [ppm]) | NH₃ | Cleaning Capacity (L/ L agent) |
|---|---|---|---|---|---|
| | Alkali Metal (Adhered Amount) | Dried Gas | | | |
| Ex. 1 | KOH (20) | Nitrogen | Trimethylgallium(1000) | Absent | 30 |
| Ex. 2 | KOH (5) | Nitrogen | Trimethylgallium(1000) | Absent | 14 |
| Ex. 3 | KOH (10) | Nitrogen | Trimethylgallium(1000) | Absent | 23 |
| Ex. 4 | KOH (40) | Nitrogen | Trimethylgallium(1000) | Absent | 25 |
| Ex. 5 | NaOH (20) | Nitrogen | Trimethylgallium(1000) | Absent | 24 |
| Ex. 6 | KOH (20) | Air | Trimethylgallium(1000) | Absent | 15 |
| Ex. 7 | KOH (20) | Nitrogen | Trimethylgallium(100) | Absent | 27 |
| Ex. 8 | KOH (20) | Nitrogen | Trimethylgallium(10000) | Absent | 31 |
| Ex. 9 | KOH (20) | Nitrogen | Trimethylindium(1000) | Absent | 26 |
| Ex. 10 | KOH (20) | Nitrogen | Trimethylaluminum(1000) | Absent | 33 |
| Ex. 11 | KOH (20) | Nitrogen | Triethylgallium(1000) | Absent | 29 |
| Ex. 12 | KOH (20) | Nitrogen | Trimethylgallium(1000) | Present | 27 |
| Ex. 13 | KOH (20) | Nitrogen | Trimethylindium(1000) | Present | 24 |
| Ex. 14 | KOH (20) | Nitrogen | Trimethylaluminum(1000) | Present | 29 |
| Ex. 15 | KOH (20) | Nitrogen | Triethylgallium(1000) | Present | 25 |
| C. Ex. 1 | [Soda Lime] | ― | Trimethylgallium(1000) | Absent | 10 |
| Notification: Adhered Amounts in Table 1 are expressed with the unit of part by weight. | | | | | |

According to the present invention, a cleaning process for harmful gas containing harmful component such as trimethylgallium exhausted from manufacturing process of gallium nitride compound semiconductor, which efficiently cleans with superior cleaning capacity without reducing the removing efficiency of harmful component and without generating new harmful component of nitrogen oxides, etc., even in the case where the harmful gas to be treated is dry, or even in the case where the harmful gas contains ammonia was realized.

## Claims

1. A cleaning process of harmful gas containing at least one kind selected from trimethylgallium, triethylgallium, trimethylindium, triethylindium, trimethylaluminum and triethylaluminum as a harmful component by bringing into contact with a cleaning agent comprising a metallic oxide essentially containing copper (II) oxide and manganese (IV) oxide; and an alkali metal compound, thereby removing the harmful component from the harmful gas.

2. The cleaning process of harmful gas according to Claim 1, wherein said alkali metal compound is a hydroxide, an oxide or a carbonate of potassium, sodium or lithium.

3. The cleaning process of harmful gas according to Claim 1, wherein said alkali metal compound is potassium hydroxide, sodium hydroxide, potassium oxide or potassium carbonate.

4. The cleaning process of harmful gas according to Claim 1, wherein said alkali metal compound is adhered to said metallic oxide in an amount of 1 to 50 part by weight as converted to hydroxide of each alkali metal over an amount of 100 part by weight of the sum adding said copper (II) oxide and said manganese (IV) oxide.

5. The cleaning process of harmful gas according to Claim 1, wherein said metallic oxide comprises copper (II) oxide and manganese (IV) oxide in an amount of 60 % by weight and wherein the weight ratio between copper (II) oxide and manganese (IV) oxide is 1: 0.8 to 1:5.0.

6. The cleaning process of harmful gas according to Claim 1, wherein the moisture content in said cleaning agent is less than 1 % by weight.

7. The cleaning process of harmful gas according to Claim 1, wherein said cleaning agent is preparedly dried under the atmosphere of an inert gas before said harmful gas is brought into contact with said cleaning agent.

8. The cleaning process of harmful gas according to Claim 1, wherein said harmful gas comprises ammonia.

9. The cleaning process of harmful gas according to Claim 1, wherein said harmful gas is brought into contact with said cleaning agent at the temperature of 100 °C or lower.
